# EUROPEAN PATENT APPLICATION

(11) **EP 4 344 087 A1**
(43) Date of publication of application: **27.03.2024**
(21) Application number: 22197503.0
(22) Date of filing: 23.09.2022
(51) Int. Cl.: H04B 7/155, H04B 7/06, H04L 5/00

(54) **TRANSMISSION CONFIGURATION MECHANISMS FOR A NETWORK CONTROLLED REPEATER**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP)
(74) Representative: Grünecker Patent- und Rechtsanwälte PartG mbB

(57) **Abstract**

The present disclosure relates to a communication device, a scheduling device and respective methods for a communication device and a scheduling device. For example, the communication device comprises a transceiver and circuitry. The transceiver, in operation, (i) performs a relaying transmission of signals, and (ii) transmits or receives a transmission of control signalling. The circuitry, in operation, determines, based on whether the transmission of the control signalling overlaps, in time, with the relaying transmission of the signals: (i) a transmission configuration for the transmission of the control signalling, and/or (ii) a transmission configuration for the relaying transmission of the signals.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates increasing the efficiency of a communication system comprising a relay node. In particular, the present disclosure may increase the efficiency in a communication system, in which a relay supports (i) the simultaneous reception/transmission in different links, and (ii) a separate reception/transmission (i.e. at different times) in said different links.

In an embodiment, the techniques disclosed here feature an apparatus (e.g. communication device, in particular a relay apparatus).The apparatus comprises a transceiver and circuitry. The transceiver which, in operation: (i) performs a relaying transmission of signals, and (ii) transmits or receives a transmission of control signalling. The circuitry, in operation, determines, based on whether the transmission of the control signalling overlaps, in time, with the relaying transmission of the signals: (i) a transmission configuration for the transmission of the control signalling, and/or (ii) a transmission configuration for the relaying transmission of the signals.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming scenario;
- **Fig. 6**: is a block diagram illustrating the functional communication structure of a relay node in a communication system in which the node relays signals between a base station and a UE;
- **Fig. 7a**: a schematic drawing illustrating an exemplary resources allocation for a transmission in the C-link UL (in slot 3) and transmissions in the Backhaul UL (in slots 1, 2, and 4) at different time (i.e. using TDM);
- **Fig. 7b**: is a schematic drawing illustrating an exemplary resources allocation for simultaneous (in slot 3) transmissions in the C-link UL and the Backhaul UL;
- **Fig. 8**: is a block diagram of a communication system including a relay node and a base station with their respective exemplary functional structures;
- **Fig. 9**: is a block diagram illustrating an exemplary functional structure of the processing circuitry at the relay node side;
- **Fig. 10**: is a block diagram illustrating an exemplary functional structure of the processing circuitry at the base station side;
- **Fig. 11**: is a flow chart illustrating exemplary steps performed by a relay node;
- **Fig. 12**: is a flow chart illustrating exemplary steps performed by a base station;
- **Fig. 13**: is a schematic drawing illustrating determination of the transmission power for C-link UL transmissions depending on whether or not the respective C-link UL transmission is overlapping with a backhaul UL transmission;
- **Fig. 14**: is a schematic drawing illustrating determination of the transmission power for backhaul UL transmissions depending on whether or not the respective backhaul UL is overlapping with a C-link UL transmissions;
- **Fig. 15**: is a schematic drawing illustrating determination of the resource configuration for C-link UL transmissions depending on whether or not the respective C-link UL transmission is overlapping with a backhaul UL transmission; and
- **Fig. 16**: is a schematic drawing illustrating determination of the beam configuration backhaul UL transmissions depending on whether or not the respective backhaul UL is overlapping with a C-link UL transmission.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

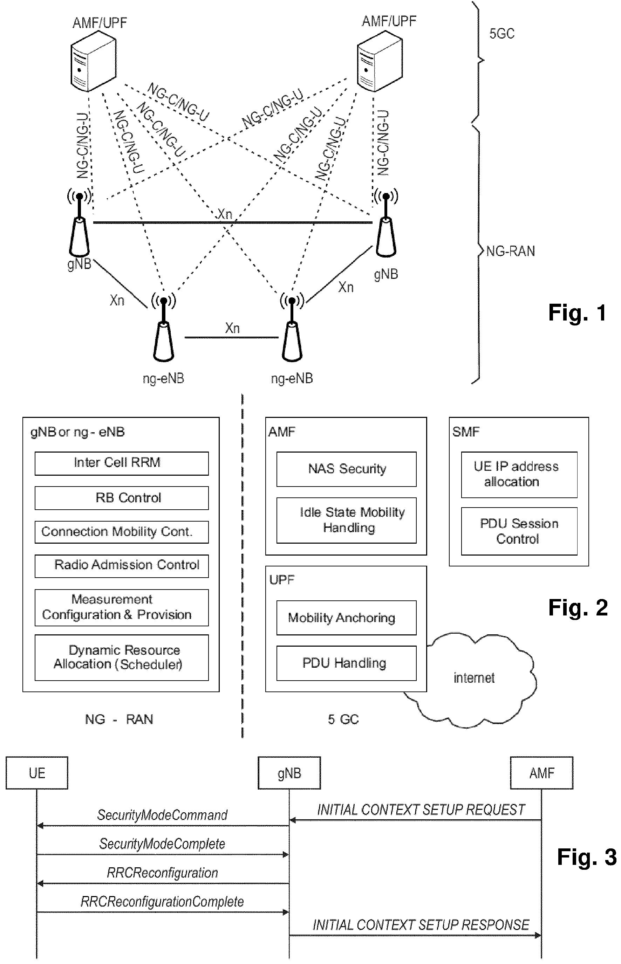

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

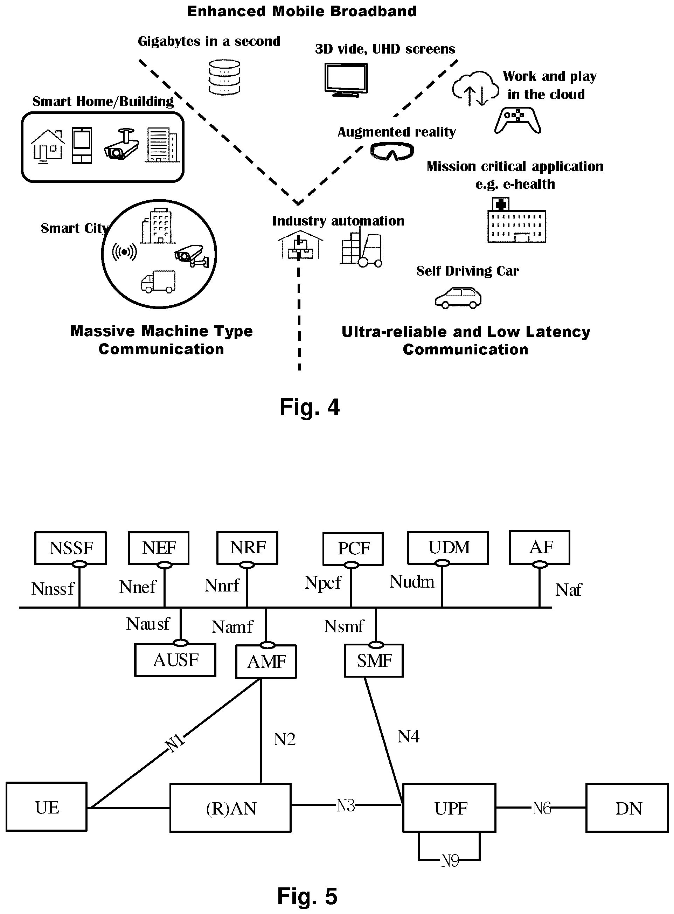

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS). Reference signals may be used at a receiving apparatus for estimating channel characteristics and/or for synchronization. One or more parameters of a reference signal may also be used to transmit data (control or payload) while another one or more parameters of the same reference signal may be used as the reference. For example, a reference signal may be used to compare the received power with the reference power. However, the reference signals may also be used to compare phase and/or frequency or the like.

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band.. It is applicable for any frequency bands, but may be particularly advantageous for higher frequency bands due to the increasing benefits of beamforming. In particular, frequency bands for 5G NR are separated into two different frequency ranges. First, there is Frequency Range 1 (FR1), which includes sub-6 GHz frequency bands, some of which are traditionally used by previous standards, but have been extended to cover potential new spectrum offerings from 410 MHz to 7125 MHz. The other band is Frequency Range 2 (FR2), which includes frequency bands from 24.25 GHz to 52.6 GHz.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term *"physical resource block"* (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Terminology

In the following, UEs, relay nodes, base stations (network nodes), and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A ***terminal*** or ***user terminal*** or ***user device*** or ***mobile station*** or ***mobile node*** is referred to in the LTE and NR as a ***user equipment (UE).*** This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node,*** e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Relay Node

The term **"*relay*"** or ***"relay node"*** refers to a general node (in a communication system) or any communication device that is used to receive signals from one entity, amplify them and transmit them to another entity.

In other words, a relay may be any device controlled by a first entity (in the following usually assumed to be a base station/scheduling device/gNB) to relay signals between said first entity and a second entity (in the following usually assumed to be a UE). However, while a relay herein is described as amplifying signals between a base station (network node, scheduling device) and a user equipment, the relay of the present disclosure may be also used to amplify signals e.g. between two user equipments. In particular, a relay may be a UE, a base station (e.g. a gNB), an NCR, or an Integrated Access Backhaul (IAB).

For instance, a relay may be a RF (radio frequency) repeater, which does not perform baseband L1 processing such as demodulation and decoding or (H)ARQ, but merely receives, amplifies and re-sends the signals. However, the present invention is not limited thereto as the relay may also be a smart repeater, which performs demodulation, decoding, and/or error correction on signals before relaying them. In particular, the signal received by the relay from one entity that is to be relayed to another entity and the corresponding signal the relay transmits to said other entity may be identical (up to amplification) or may be different (e.g. in terms of modulation, but also e.g. due to error correction). Here, it should be noted that, in the present disclosure, (i) signals/transmissions received by the relay from one entity that are to be relayed to another entity are also referred to as *"signals*/*transmissions to be relayed",* and (ii) signals/transmissions of the relay node in which the relay relays a signal/transmission to be relayed as ***"relay(ing) signals*/*transmissions".*** In general, Transmissions to be relayed may be (i) received from the gNB or (ii) be transmission received from said other entity and to be relayed to the gNB; and relay transmission may be (i) transmissions transmitted to the gNB or (ii) be transmission towards said other entity. Furthermore, it is noted that the present disclosure is applicable to relay irrespectively of its layer (RF, L1, L2, L3, etc), applicable frequency band, domain of multiplexing or the like.

In general, relay nodes serve for extending the coverage in a cell and/or to improve performance on a cell edge while enabling cost reduction in comparison with increasing the number of base stations (network nodes). In the downlink, a relay node may receive signals from a network node (e.g. a scheduling device or base station) in downlink, amplifies them, and transmits them further e.g. to one or more terminals. In the uplink, the relay node may receive signals from said one or more terminals, amplifies them, and transmits them further to a network node (e.g. a base station). Thus, a relay node may have a plurality of radio access interfaces, in particular:
- an interface for radio access with a UE (also referred to as access link),
- an interface for radio access with a base station (also referred to as backhaul link), and/or
- an interface for sending control information to and/or receiving control information from the base station (also referred to as C-link).

Conceptually a relay node can be implemented in any layer (e.g., RF, L1, L2, or L3). However, for the sake of efficiency and cost reduction, a more simple repeaters on physical layer may be desirable.

LTE relaying was different to the use of a repeater which merely re-broadcasts (as an RF relay does) signals and was thus less cost-efficient. For example, a L2 relay in LTE actually received, demodulated and decoded the data, applied any error correction, etc to it and then retransmitted a new signal. In this way, the signal quality could be enhanced with an LTE relay, rather than suffering degradation from a reduced signal to noise ratio when using a repeater. For an LTE relay, the UEs communicated with the relay node, which in turn communicated with a "donor" eNB. It was possible to have a time division multiplex or frequency multiplex for the links UE-relay and relay-BS. Some other relay options have been provided, none of which supported beamforming. The LTE relaying concept has not been widely adopted.

The 3GPP has recently defined a study item followed by a work item for network-controlled repeaters (NCR) in new radio, rel. 18 (cf. 3GPP RP-213562, "New SI: Study on NR Smart Repeaters", RAN#94e, Dec. 2021, available freely at www.3gpp.org). Accordingly, a relay may be a repeater that can extend the network coverage and is supposed to be more cost efficient compared to the Integrated Access and Backhaul (IAB) that was introduced in Rel. 16.

One of the desirable features of network-controlled repeaters is the ability of beamforming. The LTE repeaters were designed to work in sub-3 GHZ bands, in which beam forming is not required [TS 36.106]. This is one of key difference between the network-controlled repeaters and the LTE repeaters. The network-controlled repeater should support both outdoor and indoor scenarios.

Objectives of the study item for the network-controlled repeaters include the following features. Network-controlled repeaters (also known as smart repeaters) are to be used for extension of network coverage on FR1 FDD/TDD and FR2 TDD bands, while during the during the study, FR2 TDD developments may be prioritized for both, outdoor and 021 (outdoor-to-indoor) scenarios. The repeaters should be only single hop stationary smart repeaters that are to be transparent to UEs. In other words, there would be the signal paths gNB->sRelay->UE and UE->sRelay->gNB only (sRelay here referring to a smart relay, a smart repeater, or network-controlled repeater used in these examples exchangeably). The smart repeaters should be capable of maintaining the gNB-repeater link and repeater-UE link simultaneously. Cost efficiency is a key consideration.

The concepts that will need to be studies include identifying which side (control) information would be necessary or desirable for the smart repeaters that involve an assumption of maximum transmission power (as defined in L1). The side information may include beamforming information, timing information to align transmission/reception boundaries, information on uplink and downlink TDD configuration, ON-OFF information for efficient interference management and improved energy efficiency, power control information for interference management, and/or the like.

As mentioned above, the amplify-and-forward (AF) relays (RF repeaters) were also possible for LTE. Such relay is transparent in the system, it amplifies the received signal and forwards it to users. The relay itself does not know whether the amplified signal is a desired signal received from the UE/gNB, or whether it is merely an interference or noise. Hence, the relay may increase the inference in the system if it is not configured/deployed properly. The LTE RF repeater has been designed to work in sub-3 GHZ bands, in which beam forming was not required (cf. 3GPP TS 36.106, "Evolved Universal Terrestrial Radio Access (E-UTRA); FDD repeater radio transmission and reception, "version 17.0.0 available freely at www.3gpp.org). However, the network-controlled repeaters, considered for Rel. 18, are supposed to work in both FR1 and FR2, with the possibility of beamforming. Hence, additional considerations should be taken for their design.

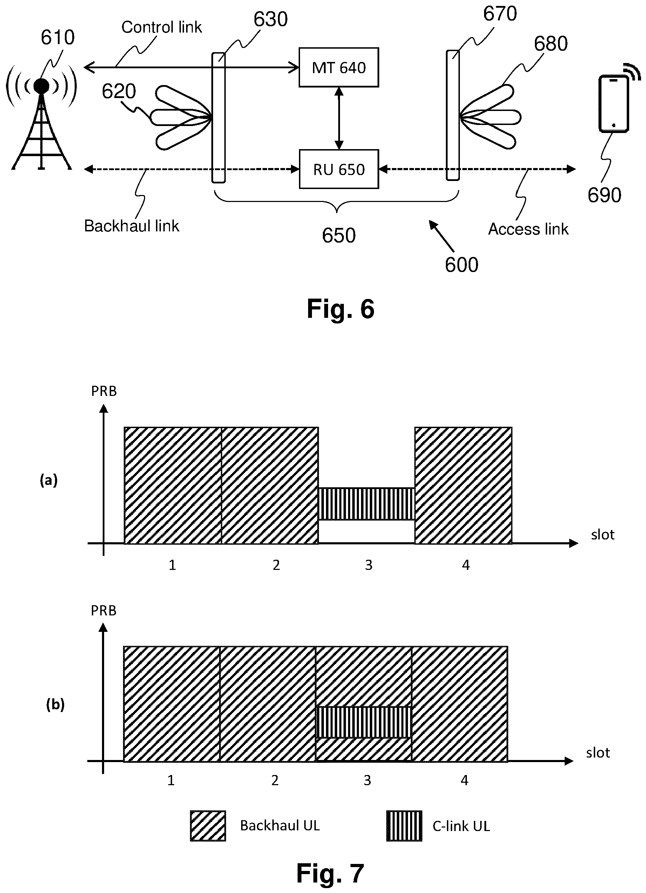

**Fig. 6** shows an exemplary design of a communication system 600 including a relay 650, which may be a network-controlled repeater (NCR) as envisaged currently for the NR. The relay 650 includes, as functional units, a mobile termination section 640 (also referred to as mobile terminal or MT) and a radio unit (RU) section 660. The MT section 640 may receive control signals/information from a network node (gNB) 610 and configures the RU section 660 accordingly.

It may also send information to the gNB 610. It is noted that the MT section 640 (which may be similar to a UE in its functionality) may use the channels described above (e.g. in Section "Downlink control channel monitoring, PDCCH, DCI" or others) to communicate with the gNB. The RU section 660 is responsible for receiving and amplifying the signal (including data and/or control information), received from the gNB 610 and/or one or more (serving) UE(s) such as the UE 690 illustrated in the figure. In NR, the term currently used for the MT section is NCR-MT, and the term currently used for the RU section is NCR-Fwd (Fwd for forwarding).

In Fig. 6, the relay 650 also includes a transceiver which is illustrated by way of a first transceiver portion 630 that transmits signals/transmission 620 towards the gNB 610 or receives signals 620 from the gNB 610 (and possibly further gNBs) and a second transceiver portion 670 that transmits signals 680 towards one or more UEs 690 or receives signals 680 from one or more UEs 690. As indicated, the transmissions/signals may be transmitted/received through beams (e.g. may be directional transmission). However, the present disclosure is not limited thereto.

As also indicated in Fig. 6, in particular in NR, the link between the gNB (i.e., the device controlling the relay) and the MT for receiving/sending control information is also referred to as Control Link or C-link, the link between the gNB and RU for receiving/forwarding signals is referred to as Backhaul Link, and the link between the RU and the UE receiving/forwarding signals is referred to as Access Link.

Examples of control information for the NCR are control signals for ON-OFF, power control, and TDD UL/DL configurations. In general, semi-static and dynamic indications may be used for the ON/OFF signalling and/or the power control. Dynamic and semi-static indications both could be supported.

Regarding the TDD UL/DL configuration, flexible symbols could be supported by the NCR, e.g. the gNB could configure flexible slots/symbols dynamically or semi-statically (i.e., the gNB could send indications to the NCR indicating whether a flexible symbol/slot is a DL or a UL symbol/slot dynamically or semi-statically). Dynamic and semi-static indications both could be supported. In general, the NCR could also be configured to not amplify signals over flexible slots/symbols.

It is further noted that Fig. 6 illustrates an exemplary functional communication structure of the relay. In general, there may be one transceiver unit that handles the transmission and/or reception from/to any entity. Such transceiver may include a plurality of antennas and amplifiers and, possibly, further circuitry for effectuating transmission and reception of signals. It may include more than one transmission and/or reception portions so that simultaneous transmission and reception to one or more communication peers is possible.

### Further Improvements

As further explained with reference to **Fig. 7(a)** and **(b)****,** each of which illustrating exemplary resource allocations to the C-link UL and the Backhaul UL, the inventors have identified problems when configuring a relay node.

As explained above, the NCR may support UL transmissions of the C-link (i.e., the link between the gNB and NCR-MT for receiving/sending control information) and UL transmissions in the backhaul link (i.e., the link between the gNB and NCR-Fwd for receiving/forwarding signals). As illustrated in **Fig. 7(a)****,** in general the NCR could perform the UL transmissions of the C-link and the UL transmissions of the backhaul link at different times, i.e. performs them in a TDM manner. Furthermore, the simultaneous UL transmissions of C-link and backhaul on overlapping band may also be supported according to the NCR capability, as illustrated in **Fig. 7(b)****.** However, the simultaneous UL transmissions could introduce additional interference for decoding the control signals or data at the gNB. In addition, the NCR might be limited with a maximum/allowed transmission power. Hence, the NCR may not be able to meet the configured UL transmission powers for the backhaul and C-link. In general, these problems apply to simultaneous transmission by the relay in any two different links (e.g. C-link, backhaul link, and/or access link). Furthermore, a transmission by the relay in one link may also introduce interference with a reception by the relay in another link.

### Embodiments

The inventors have identified the possibility of providing improved procedures, for allowing to avoid one or more of the above described disadvantages. The present invention relates to different solutions and variants for such an improved procedures. Accordingly, the present disclosure provides techniques for increasing the efficiency of a communication system comprising a relay node. In particular, the present disclosure may increase the efficiency in a communication system, in which a relay supports (i) the simultaneous reception/transmission in different links, and (ii) a separate reception/transmission (i.e. at different times) in said different links.

The present disclosure in particular provides scheduling devices, corresponding methods for scheduling devices, communication devices (e.g. adapted/configured to perform the function of a relay node in a communication system), corresponding methods and (computer) programs (e.g. stored on a memory) for communication devices, communications systems comprising such scheduling devices and communication devices, as well as integrated circuits which, in operation, control a processes of scheduling devices/communication devices to perform the respective methods.

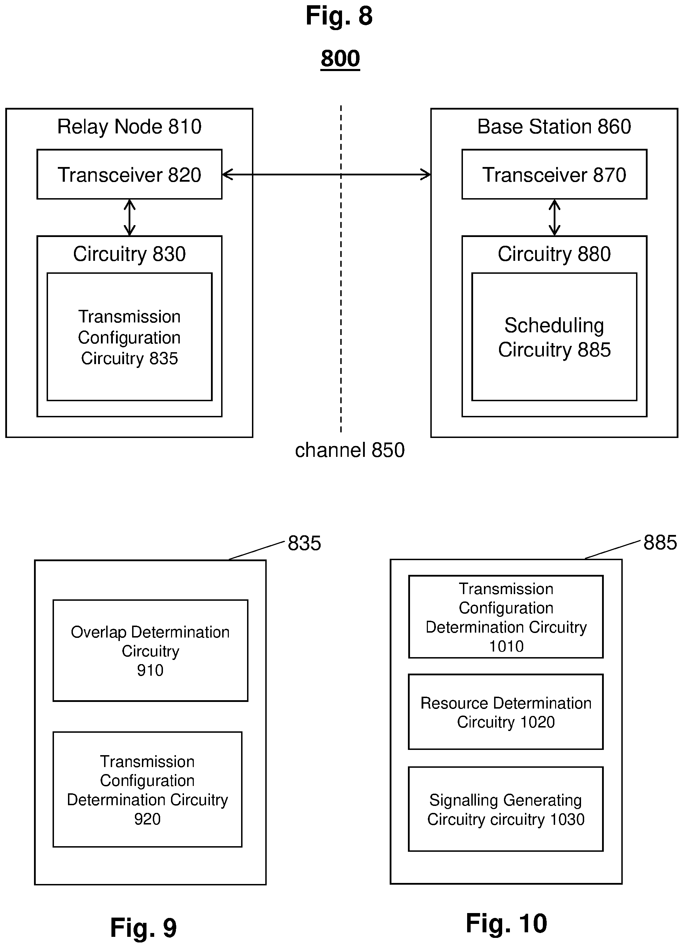

An example of such communication system is illustrated in **Fig. 8****.** The communication system 800 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 8** illustrates a general, simplified and exemplary block diagram of a communication device 810 (here exemplarily assumed to be a relay node) and a scheduling device 860 (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 810 may also be a sensor device, a wearable device, or a connected vehicle, or a controller of an automated machine in an industrial factory. The communication device 810 is assumed to be able to function as a relay between the base station and another communication device.

As illustrated in **Fig. 8****,** the communication device 810 and the scheduling device 860 (eNB/gNB) may communicate with each other over a (wireless) physical channel 850 respectively using their transceivers 820 (relay node side) and 870 (base station side). Together, the scheduling device 860 and the relay node 810 form the communication system 800. The communication system 800 may further include other entities such as those shown in Fig. 1 and, in particular said other communication device towards which the relay node relays signals from the base station and/or from which the relay node receives signals to be relayed to the base station.

### Transceiver & Circuitry

As illustrated in **Fig. 8** (left-hand side), the communication device may comprise a transceiver and circuitry (or processing circuitry), and the scheduling device may comprise a transceiver and a (processing) circuitry.

The term ***"transceiver"*** refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example the circuitry may include one or more processors (or processing units or any LSIs), microcontrollers, programmable hardware such as FPGAa and/or dedicated hardware such as ASICS or the line, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication device 810 as e.g. illustrated in **Fig. 8** (left-hand side) is provided. The communication device 810 comprises a transceiver 820 and circuitry 830. The transceiver 820, in operation: (i) performs a relaying transmission of signals, and (ii) transmits or receives a transmission of control signalling. The (processing) circuitry 830, in operation, determines, based on whether the transmission of the control signalling overlaps, in time, with the relaying transmission of the signals: (i) a transmission configuration for the transmission of the control signalling, and/or (ii) a transmission configuration for the relaying transmission of the signals.

It is noted that the circuitry 830 may implement more functionality than the above-mentioned determining of the transmission configuration(s), as it may, for instance, further control the transceiver 820. In particular, circuitry 830 may control the transceiver 820 to perform the relaying transmission of signals, to transmit or receive transmissions of control signalling. Thus, the circuitry 830 is exemplarily considered to include Transmission Configuration Circuitry 835, which is configured to perform said determining of the transmission configuration(s). The configuration may be provided by hardware adaption and/or by software.

**Fig. 9** shows an exemplary functional structure of the Transmission Configuration Circuitry 835. In particular, the circuitry 835 may include Overlap Determination Circuitry 910 and Transmission Configuration Determination Circuitry 920. The Overlap Determination Circuitry 910 may be responsible for (e.g. configured to) determining (i) whether or not a (i.e. a particular) relaying transmission overlaps with a (e.g. any) transmission of control signalling; and/or whether or not a (i.e. a particular) transmission of control signalling overlaps with a (e.g. any) relaying transmission. Transmission Configuration Determination Circuitry 920 may be responsible for determining, based on the result(s) of the determination(s) of the Overlap Determination Circuitry 910, the transmission configuration of the (particular) relaying transmission(s)/transmission(s) of control signalling.

It is noted that any of the circuitries 830, 835, 910 and 920 may also implement more functionality. For instance, a circuitry may be configured to for determine resources for transmission/reception of data, in particular the resources for relaying transmission and transmissions of control signalling. In particular, the time (e.g. start, end, and/or length) of transmissions may be determined by a circuitry and (if not determined by the Circuitry 910 itself) provided e.g. via an interface to the Overlap Determination Circuitry 910. For instance, the transceiver 820 may receive signalling including an indication indicating resources for transmission(s) (e.g. a scheduling DCI), a circuitry may obtain said indication from the signalling, and the relay may determine the resources based on the obtained indication. In particular, the transceiver 820 may receive the First Control Signalling transmitted by the gNB in step S1260, described below, a circuitry of the relay may obtain the indication of the First Resource allocation from the First Control Signalling, and the relay may determine the First Resource allocation based on the obtained indication. The Overlap Determination Circuitry may then determine whether the First Resource allocation, which specifies, allocates, and/or assigns resources for a control signalling, overlap with a relaying transmission.

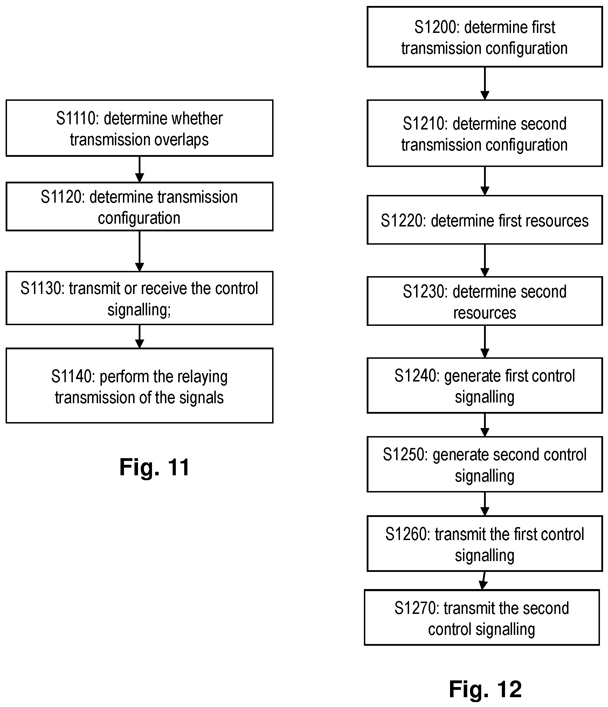

In correspondence with the above described communication device, a communication method to be performed by a communication device is provided. As shown in **Fig. 11****,** the method comprises a step S1120, of determining based on whether a transmission of control signalling overlaps, in time, with a relaying transmission of signals: (a) a transmission configuration for the transmission of the control signalling, and/or (b) a transmission configuration for the relaying of the signals; a step S1130 of transmitting or receiving the control signalling; and a step S1140 of performing the relaying transmission of the signals.

In correspondence with the above description communication device, the communication method may (optionally) comprise a step S1110 of determining (i) whether or not a (i.e. a particular) relaying transmission overlaps with a (e.g. any) transmission of control signalling; and/or whether or not a (i.e. a particular) transmission of control signalling overlaps with a (e.g. any) relaying transmission.

It is noted that, if the relay determines, e.g. in step S1120, a transmission configuration for a transmission of control signalling, the relay may perform the transmission of said control signalling (e.g. in step S1130) in accordance with the transmission configuration determined for said control signalling transmission. Furthermore, if the relay determines, e.g. in step S1120, a transmission configuration for a relay transmission, the relay may perform said relay transmission (e.g. in step S1140) in accordance with the transmission configuration determined for said relay transmission.

According to another exemplary embodiment, in correspondence with the above described method for a communication device, an integrated circuit is provided. Said integrated circuitry, in operation, controls a process of a communication device, the process including the steps of the above method for the communication device. Said integrated circuitry may e.g. be the above described circuitry 830 or 835, and/or may be deployed/deployable in a communication device, in particular a relay node.

As also shown in **Fig. 8** (right-hand side), according to another exemplary embodiment, a scheduling device 860 is provided. The scheduling device 860 comprises a transceiver 870 and circuitry 880. The (processing) circuitry 880, in operation: (i) determines a first transmission configuration to be used by a communication device for transmitting or receiving a transmission of control signalling if said transmission overlaps, in time, with a relaying transmission of the communication device, the relaying transmission relaying signals from one or more than one user equipment (UE) to the scheduling device; (ii) determines a second transmission configuration to be used by the communication device for the transmission of the control signalling if said transmission does not overlap, in time, with the relaying transmission; (iii) determines, in accordance with the first and the second transmission configuration, a first resource allocation to be used by the communication device for the transmission of the control signalling; (iv) determines, in accordance with the first and the second transmission configuration, a second resource allocation to be used by the UE(s) for transmitting the signals to the communication device; (v) generates first control signalling including an indication indicating the first resource allocation; and (vi) generates second control signalling including an indication indicating the second resource allocation. The transmitter 870, in operation, transmits to the communication device: (i) the first control signalling, and (ii) the second control signalling to be relayed by the communication device to the UE(s).

To be specific, the just-mentioned *"first resource allocation"* are "first" resources to be used for a transmission of control information from the relay to the gNB, or resources to be used for a transmission of control information from the gNB to the relay. In other words, the First Resource allocation specifies, allocates, and/or assigns resources for a transmission in the C-link (UL or DL). Furthermore, the *"second resource allocation"* specifies, allocates, and/or assigns "second" resources to be used by the UE(s) for transmitting the signals to the communication device (relay), in order to be relayed by the relay to the gNB. As also explained below, the time instances for the relaying transmission of the relay may already be set and the relay may be configured with them. Furthermore, usually the times instances in which the UE(s) transmit signals to the relay and the corresponding relaying transmission, in which the relay relays said signals to the gNB, are closely related (e.g. the relay may relay received signals (immediately) when they are received). Thus, when determining the second resources, the gNB may determine the frequency resources to be used by the UE(s), and/or assign particular configured time instances to particular UEs or particular transmission of a UE.

Transceiver 870 may also receive relay transmission from the communication device, and/or transmit signals to be relayed to the communication device. Transceiver 870 may also receive or transmits in the first resource allocation. The circuitry 880 may implement more functionality than the just-mentioned determining and generating, as it may, for instance, further control the transceiver 870 to transmit or receive control signalling (e.g. to transmit the "first" and the "second" control signalling), and/or to receive or transmit data. Furthermore, the gNB may transmit or receive control signalling in the first resources, and receive the relaying transmission(s) in which the relay relays the signals transmitted by the UE(s) in the second resources.

In general, any transmission or reception by the transceiver 870 may be controlled by the circuitry 880.

Thus, the circuitry 880 is exemplarily considered to include Scheduling Circuitry 885, which is configured to perform said determining and generating. The configuration may be provided by hardware adaption and/or by software. An exemplary functional structure of Scheduling Circuitry 885 is shown in **Fig. 10****.** In particular, the Scheduling Circuitry 885 may include Transmission Configuration Determination Circuitry 1010, responsible for the determination of the first and the second transmission configuration; Resource Determination circuitry 1020, which may be configured to determine the first and the second resource allocations; and Signalling Generating Circuitry 1030, which may generate the first and the second signalling. It is noted that the Scheduling Circuitry 885 may also implement more functionality, as it may, for instance also be responsible

Furthermore, in correspondence with the above described scheduling device, a communication method to be performed by a scheduling device is provided. As shown in **Fig. 12****,** the method comprises a step S1200 of determining a first transmission configuration to be used by a communication device for transmitting or receiving a transmission of control signalling if said transmission overlaps, in time, with a relaying transmission of the communication device, the relaying transmission relaying signals from one or more than one user equipment (UE), to the scheduling device; a step S1210 of determining a second transmission configuration to be used by the communication device for the transmission of the control signalling if said transmission does not overlap, in time, with the relaying transmission; a step S1220 of determining, in accordance with the first and the second transmission configuration, a first resource allocation to be used by the communication device for the transmission of the control signalling; a step S1230 of determining, in accordance with the first and the second transmission configuration, a second resource allocation to be used by the UE(s) for transmitting the signals to the communication device; a step S1240 of generating first control signalling including an indication indicating the first resource allocation; a step S1250 of generating second control signalling including an indication indicating the second resource allocation; a step S1260 of transmitting, to the communication device, the first control signalling; and a step S1270 of transmitting to the communication device, the second control signalling to be relayed by the communication device to the UE(s). Furthermore, the method for the scheduling device may comprise e.g. (not shown in Fig. 12) a step of receiving a relay transmission from the Communication device and/or a step of transmitting signals to be relayed to the communication device.

According to another exemplary embodiment, in correspondence with the above described method for a scheduling device, an integrated circuit is provided. Said integrated circuitry, in operation, controls a process of a scheduling device, the process including the steps of the above method for the scheduling device. Said integrated circuitry may e.g. be the above described circuitry 880 or 885, and/or may be deployed/deployable in a communication device, in particular a scheduling device.

It is further noted that the order of the steps may be different than shown in Fig. 11 and Fig. 12, and/or some of the steps may be performed together or even jointly. For instance, as further explained below, the base station may perform any number and/or combination of the determination steps (S120, S1210, S1220, S1230) together/jointly, perform the generation of the control signalling in steps S1250 in one step, and/or transmit the first and the second control signalling together (steps S1260 and S1270). Furthermore, any of the steps performed by the base station may in general be performed jointly with corresponding steps for other relay nodes, as well as in consideration of traffic conditions and quality requirements of services used by one or more UEs, which receive relay transmissions and/or transmit transmission to be relay to the relay node(s).

Moreover it is noted that, since the present disclosure relates to a (scheduling) device configuring a communication device (e.g. a relay node) and said communication device, the details and embodiments described herein apply to (and may be implemented by them) each of the communication device and the or scheduling device, as well as to the corresponding methods and integrated circuits unless explicit statement or context indicates otherwise. In particular, the scheduling device may be configured to generate and transmit the control signals as described below and the communication device may be configured to receive such signalling and obtain the respective indications therefrom. In particular, any of the steps/operations described below may be performed or controlled by the circuitry 830 (on the communication device side) and/or the circuitry 880 (on the base station side). Furthermore, any reception and transmission steps may be performed by the transceiver 820 (on the UE side) and/or the transceiver 870 (on the base station side) (e.g. by being controlled by the respective circuitry to do so).

### Transmission Configurations

In general, the term ***"transmission configuration"*** is to be understood broadly as any setting/configuration of a state or parameter related to a transmission of the relay node and, in particular, related to the transmission(s) of the relay node in which the relay node relays signals to be relayed (in the present disclosure, also referred to as relay transmission) or transmit control signalling to the gNB. In particular, a transmission configuration may include and/or specify a power configuration, a resource configuration, and/or a beam configuration, as further explained below.

As mentioned above, the relay determines (e.g. in step S1120) a transmission configuration for a particular transmission based on whether said particular transmission is an overlapping or a non-overlapping transmission. In particular, the relay may determine a different transmission configuration if the transmission is overlapping than when the transmission is non-overlapping. For instance, a NCR may apply a separate/different transmission configurations for C-link transmissions that overlap with a (e.g. any) backhaul transmission (from or to the NCR) than for C-link transmissions that do not overlap. In general, different transmission configuration may specify (i) mutually different, power configurations, (ii) mutually different resource configurations, and/or (iii) mutually different beam configurations.

In general, the gNB may configure the relay with:
(i) the transmission configuration (corresponding to the "First Transmission Configuration" in step S1200) that the relay is to use for a (e.g. any) transmission of a particular type when it is overlapping; and/or
(ii) the transmission configuration (corresponding to the "Second Transmission Configuration" in step S1210) that the relay is to use for said transmission of said particular type when it is non-overlapping, where

*"particular type"* refers to transmission of a particular link (e.g. C-link, backhaul link, Access link) and/or in a particular direction (e.g. UL, DL, sidelink). In other words, the relay may be supposed to use a transmission configuration for UL transmissions of the C-link (UL transmissions of the C-link, being the "type" of the transmission) if they are non-overlapping, and another transmission configuration for UL transmissions of the C-link if they are overlapping. It is further noted that the gNB may configure the relay with two mutually different transmission configurations for a first type (UL C-link), and with two mutually different transmission configurations for another, second type (e.g. UL backhaul) at the same time, wherein the transmission configurations for the first type may be different than the transmission configurations for the second type.

Accordingly, if the relay determines that a transmission is overlapping, the relay may select the transmission configuration that is configured for overlapping transmissions (of the type of this transmission), and if the relay determines that a transmission is non-overlapping, the relay may select the transmission configuration that is configured for non-overlapping transmissions. In other words, the determination of the transmission configuration is step S1120 may be a step of selecting a transmission configuration (e.g. from/among two configured transmission configurations) based on the whether or not the transmission is overlapping.

In general, before configuring the relay, the gNB may perform a step of determining the transmission configuration for overlapping transmissions of a type (e.g. step S1200) and/or a step of determining (e.g. step S1210) the transmission for non-overlapping transmissions of said type. It is noted that this a determination in which the gNB decides the transmission configurations e.g. based on traffic consideration, QoS consideration, interference in the cell, and the like. In particular, it is noted that: (i) the first transmission configuration determined in step S1200 may also be a transmission configuration to be used by the relay for performing overlapping relaying transmissions (rather than for overlapping transmission of control signalling), and (ii) the second transmission configuration determined in step S1210 may also be a transmission configuration to be used by the relay for performing non-overlapping relaying transmissions (rather than for non-overlapping transmission of control signalling).

For instance, in step S1200 the gNB may determine/decide the transmission configuration for overlapping transmission of control signalling, and in step S1210 the gNB may determine/decide the transmission configuration for non-overlapping transmission of control signalling. This determination may be based on the (expected) traffic in the cell, QoS of UEs, interference in the cell, and the like.

The gNB may then generate respective control signalling(s) including indicating the determined transmission configurations, and transmit them to relay. It is noted that, alternatively or in addition to the determination of the transmission configuration for overlapping (non-overlapping) transmissions of control signalling, the gNB may determine/decide, in step 1200 (S1210), a transmission configuration for overlapping (non-overlapping) transmission of relay transmissions.

In general, the gNB schedules the UE(s) and the relay. Thus, the gNB can usually control/decide whether a transmission will be an overlapping or a non-overlapping transmission. When determining resources for transmissions of UE(s) and relay (as in e.g. steps S1220 and S1230, respectively), the gNB may thus also decide which transmission will be overlapping and which will be non-overlapping transmission. The gNB may thus take into account and/or exploit, when e.g. when scheduling resources/transmission (e.g. in steps S1220, S1230), the circumstance that overlapping and non-overlapping use different transmission configurations, e.g. in order to reduce interference, increase the reliability of a certain transmission e.g. in view of QoS requirements of a particular services and the like. In particular, the gNB may determine the first and/or the second resource allocation, based on the first and the second transmission configuration. In particular, the gNB may determine whether the first or the second transmission configuration is to be used for a transmission (relaying transmission or transmission of control signalling, and (i) allocate, to said transmission, overlapping resources when the first transmission configuration is to be used, and (ii) allocate, to said transmission, non-overlapping resources when the second transmission configuration is to be used.

### Overlap & Determination of Overlap

It is noted that, in the present disclosure, the term ***"overlaps"*** refers to an overlap in time. More specifically, a first and a second transmission may be considered to be overlapping when at least a part of one of the transmission takes place or is performed while/when the other transmission (e.g. the second transmission) is performed. For instance, the relay may determine whether two transmissions overlap based on the resources allocated to said two transmissions. In other words, if the time index (e.g. a slot/symbol index) of a (e.g. at least one) resource of the first transmission is identical to the time index of a (e.g. any) resource of the second transmission, the first transmission and the second transmission may be considered overlapping (e.g. determined to overlapping by the relay and the gNB).

As mentioned above, when the transmission configuration for a transmission of control signalling is to be determined (e.g. in step S1210), it may be determined (e.g. in step S1110) whether or not said transmission of control signalling overlaps with any relaying transmission. Furthermore, when the transmission configuration for a relaying transmission is to be determined (e.g. in step S1210), it may be determined (e.g. in step S1110) whether or not said relaying transmission overlaps with any transmission of control signalling. It is noted that, in the present disclosure, expressions like *"overlapping transmission"* and *"non-overlapping transmission"* refer to overlapping/non-overlapping in accordance with these determinations for control signallings and relaying transmissions. In other words, a non-overlapping transmission of control signalling may e.g. be overlapping, in time, with another transmission of control signalling. Furthermore, it is noted that the determination whether or not a transmission is overlapping may be performed only for a particular frequency range (e.g. a BWP). For instance, when determining whether or not a transmission of control signalling overlaps with relaying transmission, only relaying transmissions in particular/predetermined/configured frequency range (e.g. a frequency range in which the transmission of control signalling will be performed) may be taken into account. A control transmission that overlaps with a relaying transmission outside said frequency would then still be considered non-overlapping.

It is noted that the transmission of the control signalling may be a transmission, which (i) the relay receives from the gNB, or (ii) a transmission the relay transmits to the gNB. Furthermore, as mentioned above, a relaying transmissions are transmissions, which (i) the relay transmits to the gNB, or (ii) which the relay transmits to a third entity (other than the gNB). To be specific, the relay may also determine, when determining a transmission for relaying, whether the relaying transmission overlaps with any reception of control signalling.

As mentioned above, the relay may obtain the resources/time of a transmission of control signalling based on an indication included in signalling (such as the First Control Signalling) received from the gNB. Furthermore, the relay may obtain the bandwidth part containing resources of a relaying transmission based on an indication included in signalling received from the gNB. Furthermore, the relay may determine the transmission time of a relay transmission e.g. based on an indication included in signalling received from the gNB. The relaying instances (i.e., the transmission times of the relaying transmissions) could be indicated dynamically or semi-statically by the gNB.

In other words, the NCR may know the relaying and control transmission instances (i.e. the transmission times of relaying transmission and transmission of control signalling, respectively), from predefined configurations or received DCIs. For instance, the relay may receive control signalling from the gNB that includes indication(s) of the transmission times of one or more relaying transmissions, obtain said indication(s) from the signalling, and determine the transmissions time(s) based on the obtained indication(s). Based on the known relaying and control transmission instances, the relay may then determine (S1110) when and whether overlapping occurs.

### Different Power Configurations

As already mentioned above, a transmission configuration may include a power configuration. In general, a "power configuration" may specify or indicate a transmission (Tx) power which the relay node is (supposed) to use for performing (certain, e.g. of a particular type as explained above) transmissions. For instance, a power configuration may be a power control configuration, such as an open/closed power loop or a TPC associated with a particular power (level).

In general, the transmission power for performing a transmission may depend on whether or not said transmission is overlapping. In other words, in general, the relay may determine (e.g. in step S1120), based on whether a transmission of control signalling overlaps with relaying transmissions, a power configuration for the transmission of the control signalling. For instance, the relay (e.g. circuitry 835) may determine (e.g. in step S1120):
(i) if the transmission of a control signalling overlaps with relaying transmissions, that a first power configuration is to be used for the transmission of the control signalling; and
(ii) if the transmission of the control signalling does not overlap with relaying transmissions, that a second power configuration is to be used for the transmission of the control signalling.

In other words, the relay may use a first power configuration for overlapping transmissions (e.g. for overlapping transmissions of a particular type) and a second power configuration for non-overlapping transmissions, wherein said first and second power configuration may have/specify mutually different transmission powers.

For instance, The NCR may be configured (e.g. by the gNB) with different power control configurations (e.g., with separate open/closed power loops, or with TPC with different levels). More specifically, the relay may be configured with two different power (control) configurations, one for overlapping and one/another for non-overlapping transmissions (of a particular type). In particular, a relay/NCR may be defined/configured with two different/separate power configurations for the C-link (e.g. two power configurations for transmissions of control information/signalling to the gNB): one for non-overlapping transmission and one for overlapping transmissions. Alternatively or in addition, the relay/NCR may be defined/configured with two different/separate power configurations for the backhaul (e.g. two power configurations for relaying transmissions): one for non-overlapping transmission and one for overlapping transmissions.

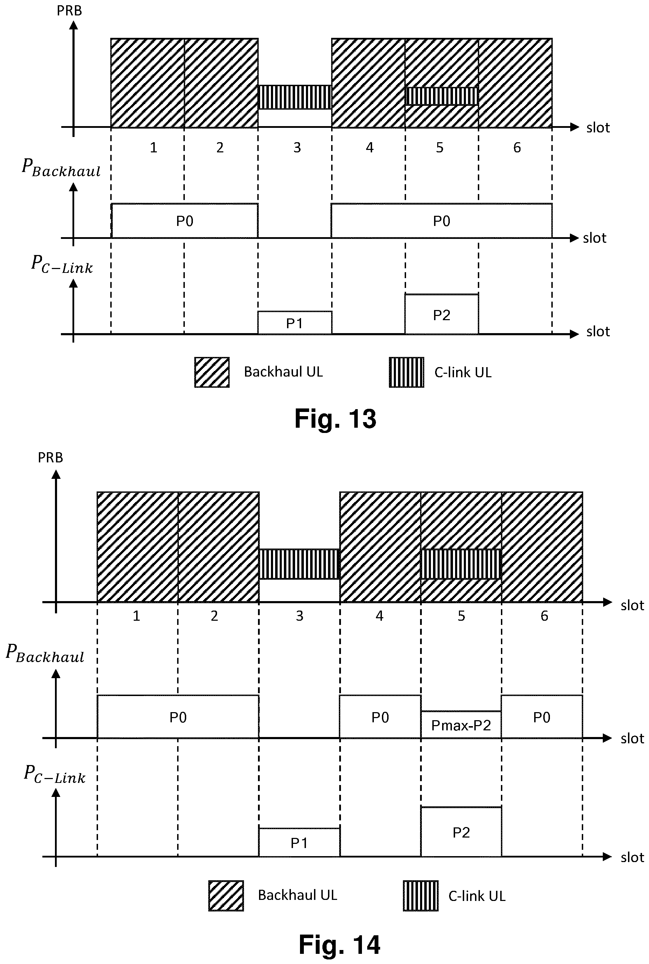

An example of a NCR configured with different transmission powers for overlapping and non-overlapping UL C-link transmission is illustrated in **Fig. 13****.** The first row of Fig. 13, shows an exemplary resource allocation to UL transmission in the C-link and UL transmissions in the backhaul link. As can be seen (first row of Fig. 13): in slots 1, 2, 4 and 6, there is only UL transmission in the backhaul link; in slot 3 there is only UL transmission in the C-link; and, in slot 5, there is UL transmission in the C-link and UL transmission in the backhaul link, which have overlapping resources in time.

In the present example, the NCR is configured with one power configuration for the backhaul (e.g. the NCR is configured with just one transmission configuration for the backhaul or with different transmission configurations for the backhaul which, however, specify identical power configurations). Furthermore, in the example of Fig. 13, the NCR is configured with two transmission configurations for the C-link, which specify mutually different transmission power for transmission of control information to the gNB. The transmission power specified by the transmission configuration that is to be used by the relay for non-overlapping transmissions is P1; and the transmission power specified by the transmission configuration that is to be used by the relay for overlapping transmissions is P2, wherein P1 is smaller than P2.

Thus, as illustrated in the third row of Fig. 13, the NCR applies the transmission power of P1 when only a C-link UL transmission is performed (i.e. in slot 3), while it applies the transmission power of P2 for simultaneous transmissions (i.e. in slot 5). More specifically, in case of a simultaneous transmission (or an overlapping transmission), the relay applies the transmission power of P2 to the C-link transmission (cf. third row) and applies the transmission power of P0 to the backhaul UL transmission (cf. second row).

It is noted that the increased transmission power of the C-link in case of an overlap with a backhaul transmission may be used compensate the interference of the backhaul transmissions at the gNB, providing a better reliability for the decoding of the control information of the C-link transmission at the gNB side.

### Maximum Transmission Power

In general, the NCR may be configured with and/or limited by a maximum transmission power. Here, the maximum transmission power refers to a maximum transmission power the relay may use for transmissions at any given time (e.g. across all transmissions performed at a given time). In general, the maximum transmission power may be given directly by the capabilities of the NCR. The maximum transmission power may be also a maximum allowed transmission power, which may be reduced to reduce the risk of damaging the relay or to safe power consumption. The maximum transmission power may be preconfigured or may be configured by the gNB (taking into account the capabilities and/or priorities of the NCR). For instance, the gNB may reduce the maximum transmission power of the relay in order to reduce interference in the cell.

In general, if the relay is configured with a maximum transmission power and a transmission power for transmitting control signalling, the relay (e.g. circuitry 835) may determine (e.g. in step S1120) the transmission power for overlapping relaying transmissions based on: (i) the configured transmission power for transmitting control signalling, and (ii) the configured maximum transmission power. It is noted that the configured transmission power for transmitting control signalling may be a transmission power for overlapping and non-overlapping transmissions of control signalling. If the relay is configured with different transmission powers for overlapping and non-overlapping transmissions of control signalling, the relay may base (e.g. as in the example of Fig. 14) the above determination of the transmission power for the overlapping relaying on the transmission power of overlapping transmissions of control signalling.

For instance, the relay may be configured with:
- a maximum transmission power (in the following, denoted as "Pmax"),
- a transmission power for overlapping transmissions of control signalling (in the following, denoted as "P2"), and
- a transmission power for transmitting non-overlapping relay transmissions (in the following, denoted as "P0").

It is noted that the transmission power P2 for transmitting overlapping control signalling may be also a transmission for non-overlapping control signalling, or e.g. (as in the example of Fig. 14), the relay may be configured with a transmission power for transmitting non-overlapping control signalling (in the following, denoted as "P1").

The relay (e.g. circuitry 830) may then control the transceiver to transmit:
- overlapping transmissions of control signalling using the configured transmission power P2; and
- non-overlapping transmissions of control signalling using the configured transmission power P1 (or P2 when overlapping/non-overlapping transmissions of control signalling are not configured with different transmission powers);
- non-overlapping relay transmissions using the configured transmission power P0; and
- (ii) overlapping relay transmissions:
   ∘ using the configured transmission power P0, if the configured transmission power for relaying transmissions P0 is smaller than or equal to a remaining transmission power Pmax-P2, and
   ∘ using said remaining transmission power Pmax-P2, if the configured transmission power P0 for relaying transmissions is larger than the remaining transmission power Pmax-P2.

As already indicate above, the *"remaining transmission power"* here refers to the difference between the configured maximum transmission power Pmax and the configured transmission power for transmitting overlapping control signalling P2.

In particular, the relay (e.g. circuitry 835) may determine (e.g. in step S1120) that the transmission power for a particular relay transmissions: (i) is P0, if said particular relay transmission is non-overlapping, and (ii) is min(P0, Pmax-P2) if said particular relay transmission is overlapping. In other words, if the configured TX power for relaying (P0) is greater than the difference between the maximum power (Pmax) and the TX power configured of the control signal (P2), i.e. if P0>(Pmax-P2), P0 is applied; if not, i.e. if P0≤(Pmax-P2), Pmax-P2 is applied. In yet other words, considering the transmission power limit, the allocated power for the backhaul at overlapping transmission instance is min (P0, Pmax-P2). In case of a simultaneous transmissions, the NCR thus first allocates the power to C-link transmission and then allocated the remaining power to the backhaul transmissions.

An example of a determination of a transmission power based on a maximum transmission power is illustrated in **Fig. 14****.** In the example of Fig. 14, the NCR has a maximum transmission power of Pmax. Furthermore, the relay is configured with (i) the transmission power P1 for non-overlapping C-link UL transmissions, (ii) with the transmission power P2 for overlapping C-link UL transmissions, and (iii) with the transmission power P0 for non-overlapping backhaul UL transmissions.

Thus, the NCR applies (i.e. performs the transmissions using/with the respective transmission power): the transmission power P0 for the non-overlapping backhaul UL transmissions, (i.e. in slots 1, 2, 4 and 6), and the transmission power P1 for the non-overlapping C-link UL transmission (in slot 3). Furthermore, for the simultaneous/overlapping UL transmissions of backhaul and C-link in slot 5, the NCR applies: the transmission power P2 for the overlapping C-link UL transmission, and the transmission power Pmax-P2 for the overlapping backhaul UL transmission. In particular, due to the maximum transmission power limitation (i.e., Pmax), the NCR may not be able to transmit the backhaul signal with P0, and thus instead allocates the remaining power, i.e., Pmax-P2, to the overlapping backhaul UL transmission in slot 5.

### Different Resource Configurations

As already mentioned above, a transmission configuration may include a resource configuration. In general, a *"resource configuration"* may specify or indicate e.g.:
- the resources (e.g. resource elements) that are to be used for the respective transmissions; and/or
- a Modulation and Coding Schemes (MCS) that is to be used for the respective transmissions.

In general, a resource configuration configured for non-overlapping transmission of a particular transmission type and a resource configuration configured for overlapping transmission of said particular transmission type may specify mutually different resource elements, and/or a mutually different MCSs. For instance, different resource configurations may be defined/configured for each of (e.g. two different configurations may be configured: one for overlapping and one for non-overlapping transmission of the respective type):
- PUCCH of C-link (e.g., a PUCCH resource set),
- PUCCH of backhaul UL (e.g., a PUCCH resource set),
- PUSCH of C-link (e.g., a PUSCH-AllocationList), and/or
- PUSCH of backhaul UL transmissions (e.g., a PUSCH-AllocationList).

In general, the resource configuration for performing a transmission may depend on whether or not said transmission is overlapping. In other words, in general, the relay (e.g. circuitry 835) may determine (e.g. in step S1120), based on whether a transmission of a control signalling overlaps with relaying transmissions, a resource configuration for the transmission of the control signalling. For instance, the relay (e.g. circuitry 835) may determine (e.g. in step S1120):
(i) if the transmission of a control signalling overlaps with relaying transmissions, that a first resource configuration is to be used for the transmission of the control signalling; and
(ii) if the transmission of the control signalling does not overlap with the relaying transmissions, that a second resource configuration is to be used for the transmission of the control signalling.

In other words, the relay may use a first resource configuration for overlapping transmissions (e.g. for overlapping transmissions of a particular type) and a second resource configuration for non-overlapping transmissions, wherein said first and second resource configuration may be mutually different (e.g. specify different frequency resources for the transmission).

In particular, the transmission time of a transmission may be independent (and known to the relay, e.g. based on an indication/signalling received from the gNB) of whether the transmission is overlapping or non-overlapping. The relay may then determine: (i) based on this transmission time, whether or not the transmission will be overlapping; and (ii) based on the result of this determination (i.e. based on whether or not the transmission is overlapping), the frequency resources for the transmission. For instance, when determining the frequency resources, the relay may determine, for each time instance of the employed resource grid that falls in the transmission time (i.e. for each time instance that overlaps, in time, with the transmission time): the number of resources (e.g. the number of resource elements) and/or the frequencies of said resources (resource elements). For instance, a relay/NCR may be defined/configured with two different/separate resource configurations for the C-link (e.g. two resource configurations for transmissions of control information/signalling to the gNB): one for non-overlapping transmission and one for overlapping transmissions. Alternatively or in addition, the relay/NCR may be defined/configured with two different/separate resource configurations for the backhaul (e.g. two resource configurations for relaying transmissions): one for non-overlapping transmission and one for overlapping transmissions.

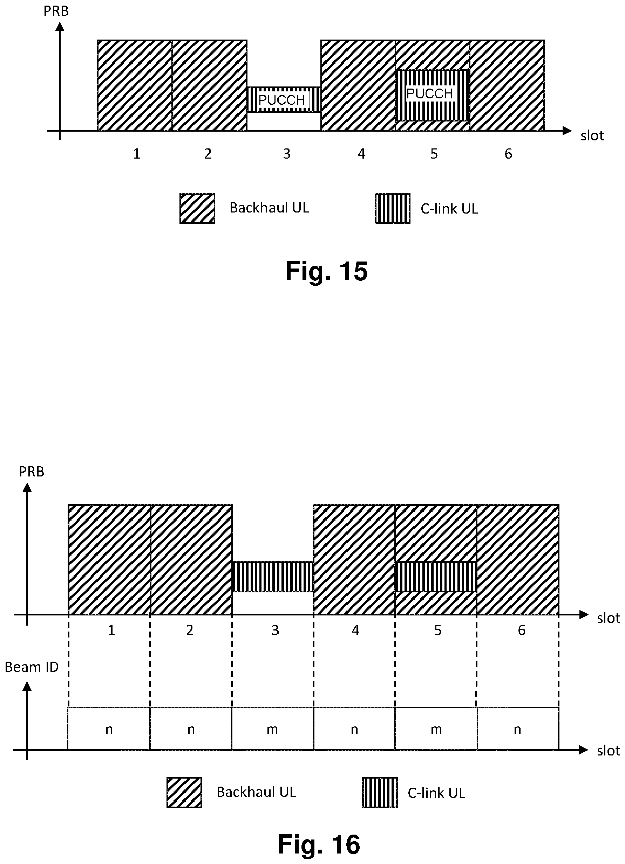

An example of a NCR configured with different PUCCH resource sets for overlapping and non-overlapping C-link UL transmissions is illustrated in **Fig. 15****.** More specifically, the transmission configuration for overlapping transmissions is assumed to specify more resources than the transmission configuration for non-overlapping transmissions. As can be seen, the NCR utilizes a PUCCH resource set with a higher number of resource elements for the simultaneous/overlapping transmission (in slot 5) compared to the case of the non-overlapping C-link UL transmission (in slot 3).

Using more resources for overlapping transmissions than for non-overlapping transmissions may achieve a better reliability and link adaptation performance. In particular, the additional resources could be used to increase the redundancy of the transmission which may compensate the interference from the other transmission (e.g. in the example the interference due to the backhaul transmission in slot 5).

### Override

In general, the relay may be configured with one transmission configuration for transmissions of control signalling, and another/different transmission configuration for relay transmissions. Of these two transmission configuration could then override the other (i.e. could be used for both transmissions) in case of an overlap. More specifically, the relay may e.g. use the transmission configuration for non-overlapping relay transmissions; and the transmission configuration for transmissions of control signalling (i) for overlapping transmissions of control signalling, (ii) for non-overlapping transmissions of control signalling, and (iii) for overlapping relay transmissions.

In particular, the relay (e.g. circuitry 835) may determine (e.g. in step S1120) that:
- the transmission configuration for an overlapping relay transmissions is the transmission configuration configured for the transmissions of control signalling;
- the transmission configuration for non-overlapping relay transmission is the transmission configuration configured for relay transmissions.

### Different Beam Configurations

The above override mechanism may e.g. be applied in the case that the configured transmission configuration for transmissions of control signalling, and the other/different transmission configuration for relay transmissions specify different beam configurations.

As already mentioned above, a transmission configuration may include a beam configuration. A beam configuration may e.g. configure the direction of the beam/transmission. For instance, the relay may be configured with one beam configuration for the C-link and another beam configuration for the backhaul link. The C-link configurations could then override the backhaul configurations when a simultaneous transmissions happens.

In example of this is will be explained with reference to **Fig. 16****.** Different beams are assigned for the C-link and backhaul UL transmissions. To be specific, the beam configuration for transmissions of the C-link UL (which are transmissions of control signalling) is ID#m, whereas the beam configuration for transmissions of the backhaul UL (which are relaying transmissions) is ID#n. Thus, the NCR is supposed to use, in the UL, beam ID#m for C-link and beam ID#n for backhaul transmissions. As illustrated in the second row of Fig. 16, in which the beam configurations used in the respective slots are indicated: for the simultaneous C-link and backhaul UL transmission in slot 5, the NCR prioritize the C-link configurations. Hence, the NCR utilize the beam configuration corresponding to beam ID#m for the simultaneous transmissions over slot 5. As also illustrated in the second row of Fig. 16, the relay uses the beam configuration corresponding to the beam ID#n for the non-overlapping UL backhaul transmission in slots 1, 2, 4 and 6; and the beam configuration corresponding to the beam ID#m for the non-overlapping UL C-link transmission in slot 3.

Prioritizing the C-link configuration may increase the reliability of the C-link transmission, which may be more important than the relay transmission as it carries control information.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. For example, a relay node, a network node, and a scheduling device may be considered (each) as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a communication device is provided. The communication device comprises transceiver and circuitry. The transceiver, in operation, (i) performs a relaying transmission of signals, and (ii) transmits or receives a transmission of control signalling. The circuitry, in operation, determines, based on whether the transmission of the control signalling overlaps, in time, with the relaying transmission of the signals: (i) a transmission configuration for the transmission of the control signalling, and/or (ii) a transmission configuration for the relaying transmission of the signals.

According to a second aspect provided in addition to the first aspect, the circuitry, in operation, determines, based on whether the transmission of the control signalling overlaps, in time, with the relaying transmission: (i) a power configuration for the transmission of the control signalling, and/or (ii) a resource configuration for the transmission of the control signalling.

According to a third aspect provided in addition to the first or the second aspect, the circuitry, in operation, determines: (i) if the transmission of the control signalling overlaps, in time, with the relaying transmission, that a first power configuration is to be used for the transmission of the control signalling, and (ii) if the transmission of the control signalling does not overlap, in time, with the relaying transmission, that a second power configuration is to be used for the transmission of the control signalling, wherein the second power configuration is different from the first power configuration.

According to a fourth aspect provided in addition the third aspect, the first power configuration has a transmission power that is different from a transmission power of the second power configuration.

According to a fifth aspect, provided in addition to one of the first to fourth aspect, the circuitry, in operation, determines: (i) if the transmission of the control signalling overlaps, in time, with the relaying transmission, that a first resource configuration is to be used for the transmission of the control signalling, and (ii) if the transmission of the control signalling does not overlap, in time, with the relaying transmission, that a second resource configuration is to be used for the transmission of the control signalling, wherein the second resource configuration is different from the first resource configuration.

According to a sixth aspect, provided in addition to the fifth aspect, the first resource configuration has: (i) resource elements that are different from resource elements of the second resource configuration, and/or (ii) a Modulation and Coding Schemes, MCS, that is different from a MCS of the second resource configuration.

According to a seventh aspect provided in addition to one of the first to sixth aspect, the circuitry, in operation, determines: (i) if the transmission of the control signalling overlaps, in time, with the relaying transmission, (a) that the transmission configuration for the transmission of the control signalling is a first transmission configuration, and (b) that the transmission configuration for the relaying transmission is the first transmission configuration; and (ii) if the transmission of the control signalling does not overlap, in time, with the relaying transmission of the signals, that the transmission configuration for the relaying transmission is a second transmission configuration, wherein the second transmission configuration is different from the first transmission configuration.

According to an eighth aspect provided in addition to the seventh aspect, the first transmission configuration and the second transmission configuration comprise respective beam configurations, wherein (i) the beam configuration of the first transmission configuration and the beam configuration of the second transmission configuration are different from each other; and/or (ii) the circuitry, in operation, determines, if the transmission of the control signalling does not overlap, in time, with the relaying transmission, that the transmission configuration for the transmission of the control signalling is the first transmission configuration.

According to a ninth aspect provided in addition to any one of the first to the eighth aspect, the communication device is configured with a transmission power for transmitting control signalling and a maximum transmission power; and the circuitry, in operation, determines, if the transmission of the control signalling overlaps, in time, with the relaying transmission, a transmission power for the relaying transmission based on the configured transmission power for transmitting control signalling and the configured maximum transmission power.

According to a tenth aspect provided in addition to the ninth aspect, the communication device is configured with a transmission power for relaying transmissions; and the circuitry, in operation, controls the transceiver, if the transmission of the control signalling overlaps, in time, with the relaying transmission: (i) to transmit the control signalling using the configured transmission power for transmitting control signalling, (ii) if the configured transmission power for relaying transmissions is smaller than or equal to a remaining transmission power, to relay the signals using the configured transmission power for relaying transmissions, and (iii)if the configured transmission power for relaying transmissions is larger than the remaining transmission power, to relay the signals using the remaining transmission power, wherein the remaining transmission power corresponds to a difference between the configured maximum transmission power and the configured transmission power for transmitting control signalling.

According to an eleventh aspect, a scheduling device is provided. The scheduling device comprises a transmitter and circuitry. The circuitry which, in operation: (i) determines a first transmission configuration to be used by a communication device for transmitting or receiving a transmission of control signalling if said transmission overlaps, in time, with a relaying transmission of the communication device, the relaying transmission relaying signals from one or more than one user equipment, UE, to the scheduling device; (ii) determines a second transmission configuration to be used by the communication device for the transmission of the control signalling if said transmission does not overlap, in time, with the relaying transmission; (iii) determines, in accordance with the first and the second transmission configuration, a first resource allocation to be used by the communication device for the transmission of the control signalling; (iv) determines, in accordance with the first and the second transmission configuration, a second resource allocation to be used by the UE(s) for transmitting the signals to the communication device; (v) generates first control signalling including an indication indicating the first resource allocation; and (vi) generates second control signalling including an indication indicating the second resource allocation. The transmitter, in operation, transmits to the communication device: (i) the first control signalling, and (ii) the second control signalling to be relayed by the communication device to the UE(s).

According to a twelfth aspect provided in addition to the eleventh aspect, (i) the first transmission configuration specifies a first power configuration to be used by the communication device for transmitting or receiving the transmission of control signalling if said transmission overlaps, and the second transmission configuration specifies a second power configuration to be used by the communication device for transmitting or receiving the transmission of control signalling if said transmission does not overlap, wherein the first power configuration is different than the second power configuration; and/or (ii) the first transmission configuration specifies a first resource configuration to be used by the communication device for transmitting or receiving the transmission of control signalling if said transmission overlaps, and the second transmission configuration specifies a second resource configuration to be used by the communication device for transmitting or receiving the transmission of control signalling if said transmission does not overlap, wherein the first resource configuration is different than the second resource configuration.

According to a thirteenth aspect, provided in addition to the eleventh or the twelfth aspect: (i) if the transmission of the control signalling overlaps, in time, with the relaying transmission, a first power configuration is to be used, by the communication device, for the transmission of the control signalling, and (ii) if the transmission of the control signalling does not overlap, in time, with the relaying transmission, a second power configuration is to be used, by the communication device, for the transmission of the control signalling, wherein the second power configuration is different from the first power configuration.

According to a fourteenth aspect, provided in addition to the thirteenth aspect, the first power configuration has a transmission power that is different from a transmission power of the second power configuration.

According to a fifteenth aspect, provided in addition to any one of the eleventh to fourteenth aspect, (i) if the transmission of the control signalling overlaps, in time, with the relaying transmission, a first resource configuration is to be used, by the communication device, for the transmission of the control signalling, and (ii) if the transmission of the control signalling does not overlap, in time, with the relaying transmission, a second resource configuration is to be used, by the communication device, for the transmission of the control signalling, wherein the second resource configuration is different from the first resource configuration.

According to a sixteenth aspect, provided in addition to the fifteenth aspect, the first resource configuration has: (i) resource elements that are different from resource elements of the second resource configuration, and/or (ii) a Modulation and Coding Schemes, MCS, that is different from a MCS of the second resource configuration.

According to a seventeenth aspect provided in addition to any of the eleventh to sixteenth aspect, (i) if the transmission of the control signalling overlaps, in time, with the relaying transmission, (a) the transmission configuration for the transmission of the control signalling is a first transmission configuration, and (b) the transmission configuration for the relaying transmission is the first transmission configuration; and (ii) if the transmission of the control signalling does not overlap, in time, with the relaying transmission of the signals, the transmission configuration for the relaying transmission is a second transmission configuration, wherein the second transmission configuration is different from the first transmission configuration.

According to an eighteenth aspect provided in addition to the seventeenth aspect, the first transmission configuration and the second transmission configuration comprise respective beam configurations, wherein (i) the beam configuration of the first transmission configuration and the beam configuration of the second transmission configuration are different from each other; and/or if the transmission of the control signalling does not overlap, in time, with the relaying transmission, the transmission configuration be used , by the communication device, for the transmission of the control signalling is the first transmission configuration.

According to a nineteenth aspect provided in addition to any of the eleventh to the eighteenth aspect, the communication device is configured with a transmission power for transmitting control signalling and a maximum transmission power; and wherein, if the transmission of the control signalling overlaps, in time, with the relaying transmission, the transmission power to be used, by the communication device, for the relaying transmission is based on (e.g. depends on) the configured transmission power for transmitting control signalling and the configured maximum transmission power.

According to a 20th aspect provided in addition to the nineteenth aspect, (i) the communication device is configured with a transmission power for relaying transmissions; and (ii), if the transmission of the control signalling overlaps, in time, with the relaying transmission: (a) the transmission power to be used, by the communication device, for the transmission of the control signalling is the configured transmission power for transmitting control signalling; (b) if the configured transmission power for relaying transmissions is smaller than or equal to a remaining transmission power, the transmission power to be used, by the communication device, for the relaying transmission is the configured transmission power for relaying transmissions; and (c) if the configured transmission power for relaying transmissions is larger than the remaining transmission power, the transmission power to be used, by the communication device, the relaying transmission is the remaining transmission power, wherein the remaining transmission power corresponds to a difference between the configured maximum transmission power and the configured transmission power for transmitting control signalling.

According to a 21st aspect, a method for a communication device is provided. The method includes the steps of: (i) determining, based on whether a transmission of control signalling overlaps, in time, with a relaying transmission of signals: (a) a transmission configuration for the transmission of the control signalling, and/or (b) a transmission configuration for the relaying of the signals; (ii) transmitting or receiving the control signalling; and (iii) performing the relaying transmission of the signals.

Further aspects are provided for the method according to the 21st aspect, corresponding to the steps performed in operation by the communication device, provided by any of the second to tenth aspects.

According to a 22nd aspect, a method for a scheduling device is provided. The method including the steps of: (i) determining a first transmission configuration to be used by a communication device for transmitting or receiving a transmission of control signalling if said transmission overlaps, in time, with a relaying transmission of the communication device, the relaying transmission relaying signals from one or more than one user equipment, UE, to the scheduling device; (ii) determining a second transmission configuration to be used by the communication device for the transmission of the control signalling if said transmission does not overlap, in time, with the relaying transmission; (iii) determining, in accordance with the first and the second transmission configuration, a first resource allocation to be used by the communication device for the transmission of the control signalling; (iv) determining, in accordance with the first and the second transmission configuration, a second resource allocation to be used by the UE(s) for transmitting the signals to the communication device; (v) generating first control signalling including an indication indicating the first resource allocation; (vi) generating second control signalling including an indication indicating the second resource allocation; (vii) transmitting, to the communication device, the first control signalling; and (viii) transmitting to the communication device, the second control signalling to be relayed by the communication device to the UE(s).

Further aspects are provided for the method according to the 22nd aspect, corresponding to the steps performed in operation by the scheduling device, provided by any of the twelfth to the 20th aspects.

According to a 23rd aspect, an integrated circuit is provided (that may be deployed in a communication device, in particular a relay node). The integrated circuit, in operation, controls a process of a communication device, the process including the steps of: (i) determining, based on whether a transmission of control signalling overlaps, in time, with relaying of signals: (a) a transmission configuration for the transmission of the control signalling, and/or (b) a transmission configuration for the relaying of the signals; (ii) transmitting or receiving the control signalling; and (iii) performing the relaying transmission of the signals.

For instance, the integrated circuit according to the 23rd aspect may comprise: an interface to a transceiver capable of receiving and transmitting signals; and circuitry configured (by hardware or software) to perform: (i) determining, based on whether a transmission of control signalling overlaps, in time, with relaying of signals: (a) a transmission configuration for the transmission of the control signalling, and/or (b) a transmission configuration for the relaying of the signals; (ii) configuring, via said interface, the transceiver to transmit or receive the control signalling; and (iii) configuring, via said interface, the transceiver to relay transmission of the signals.

The integrated circuit of the 23rd aspect may further implement the corresponding features of any of the second to the tenth aspect.

According to a 24th aspect, an integrated circuit is provided (that may be deployed in a communication, in particular a scheduling device). The integrated circuit, in operation, controls a process of a scheduling device, the process including the steps of: (i) determining a first transmission configuration to be used by a communication device for transmitting or receiving a transmission of control signalling if said transmission overlaps, in time, with a relaying transmission of the communication device, the relaying transmission relaying signals from one or more than one user equipment, UE, to the scheduling device; (ii) determining a second transmission configuration to be used by the communication device for the transmission of the control signalling if said transmission does not overlap, in time, with the relaying transmission; (iii) determining, in accordance with the first and the second transmission configuration, a first resource allocation to be used by the communication device for the transmission of the control signalling; (iv) determining, in accordance with the first and the second transmission configuration, a second resource allocation to be used by the UE(s) for transmitting the signals to the communication device; (v) generating first control signalling including an indication indicating the first resource allocation; (vi) generating second control signalling including an indication indicating the second resource allocation; (vii) transmitting, to the communication device, the first control signalling; and (vii) transmitting to the communication device, the second control signalling to be relayed by the communication device to the UE(s).

For instance, the integrated circuit according to the 24th aspect may comprise: an interface to a transceiver capable of receiving and transmitting signals; and circuitry configured (by hardware or software) to perform:
(i) determining a first transmission configuration to be used by a communication device for transmitting or receiving a transmission of control signalling if said transmission overlaps, in time, with a relaying transmission of the communication device, the relaying transmission relaying signals from one or more than one user equipment, UE, to the scheduling device; (ii) determining a second transmission configuration to be used by the communication device for the transmission of the control signalling if said transmission does not overlap, in time, with the relaying transmission; (iii) determining, in accordance with the first and the second transmission configuration, a first resource allocation to be used by the communication device for the transmission of the control signalling; (iv) determining, in accordance with the first and the second transmission configuration, a second resource allocation to be used by the UE(s) for transmitting the signals to the communication device; (v) generating first control signalling including an indication indicating the first resource allocation; (vi) generating second control signalling including an indication indicating the second resource allocation; (vii) configuring, via said interface, the transceiver to transmit, to the communication device, the first control signalling; and (vii) configuring, via said interface, the transceiver to transmit to the communication device, the second control signalling to be relayed by the communication device to the UE(s).

The integrated circuit of the 24th aspect may further implement the corresponding features of any of the twelfth to the 20th aspects.

According to a 25th aspect, a program stored on a (non-transitory) storage medium and including code instructions, which, when executed on one or more processors of a communication device, cause the one or more processors to execute the steps of any of the above mentioned methods (the 21st and 22nd aspects and their respective further aspects).

## Claims

1. A communication device comprising:
a transceiver which, in operation:
- performs a relaying transmission of signals, and
- transmits or receives a transmission of control signalling; and
circuitry which, in operation, determines, based on whether the transmission of the control signalling overlaps, in time, with the relaying transmission of the signals:
- a transmission configuration for the transmission of the control signalling, and/or
- a transmission configuration for the relaying transmission of the signals.

2. The communication device according to claim 1, wherein,
the circuitry, in operation, determines, based on whether the transmission of the control signalling overlaps, in time, with the relaying transmission:
- a power configuration for the transmission of the control signalling, and/or
- a resource configuration for the transmission of the control signalling.

3. The communication device according to claim 1 or 2, wherein,
the circuitry, in operation, determines:
- if the transmission of the control signalling overlaps, in time, with the relaying transmission, that a first power configuration is to be used for the transmission of the control signalling, and
- if the transmission of the control signalling does not overlap, in time, with the relaying transmission, that a second power configuration is to be used for the transmission of the control signalling, wherein
the second power configuration is different from the first power configuration.

4. The communication device according to claim 3, wherein
the first power configuration has a transmission power that is different from a transmission power of the second power configuration.

5. The communication device according to any one of claims 1 to 4, wherein,
the circuitry, in operation, determines:
- if the transmission of the control signalling overlaps, in time, with the relaying transmission, that a first resource configuration is to be used for the transmission of the control signalling, and
- if the transmission of the control signalling does not overlap, in time, with the relaying transmission, that a second resource configuration is to be used for the transmission of the control signalling, wherein
the second resource configuration is different from the first resource configuration.

6. The communication device according to claim 5, wherein
the first resource configuration has:
- resource elements that are different from resource elements of the second resource configuration, and/or
- a Modulation and Coding Schemes, MCS, that is different from a MCS of the second resource configuration.

7. The communication device according to any one of claims 1 to 6, wherein
the circuitry, in operation, determines:
- if the transmission of the control signalling overlaps, in time, with the relaying transmission, that:
∘ the transmission configuration for the transmission of the control signalling is a first transmission configuration, and
∘ the transmission configuration for the relaying transmission is the first transmission configuration; and
- if the transmission of the control signalling does not overlap, in time, with the relaying transmission of the signals, that the transmission configuration for the relaying transmission is a second transmission configuration, wherein
the second transmission configuration is different from the first transmission configuration.

8. The communication device according to claim 7, wherein
the first transmission configuration and the second transmission configuration comprise respective beam configurations, wherein
the beam configuration of the first transmission configuration and the beam configuration of the second transmission configuration are different from each other; and/or
the circuitry, in operation, determines, if the transmission of the control signalling does not overlap, in time, with the relaying transmission, that the transmission configuration for the transmission of the control signalling is the first transmission configuration.

9. The communication device according to any one of claims 1 to 8, wherein
the communication device is configured with a transmission power for transmitting control signalling and a maximum transmission power; and
the circuitry, in operation, determines, if the transmission of the control signalling overlaps, in time, with the relaying transmission, a transmission power for the relaying transmission based on the configured transmission power for transmitting control signalling and the configured maximum transmission power.

10. The communication device according to claim 9, wherein
the communication device is configured with a transmission power for relaying transmissions; and
the circuitry, in operation, controls the transceiver, if the transmission of the control signalling overlaps, in time, with the relaying transmission:
- to transmit the control signalling using the configured transmission power for transmitting control signalling,
- if the configured transmission power for relaying transmissions is smaller than or equal to a remaining transmission power, to relay the signals using the configured transmission power for relaying transmissions, and
- if the configured transmission power for relaying transmissions is larger than the remaining transmission power, to relay the signals using the remaining transmission power, wherein
the remaining transmission power corresponds to a difference between the configured maximum transmission power and the configured transmission power for transmitting control signalling.

11. A scheduling device comprising:
circuitry which, in operation:
- determines a first transmission configuration to be used by a communication device for transmitting or receiving a transmission of control signalling if said transmission overlaps, in time, with a relaying transmission of the communication device, the relaying transmission relaying signals from one or more than one user equipment, UE, to the scheduling device,
- determines a second transmission configuration to be used by the communication device for the transmission of the control signalling if said transmission does not overlap, in time, with the relaying transmission,
- determines, in accordance with the first and the second transmission configuration, a first resource allocation to be used by the communication device for the transmission of the control signalling,
- determines, in accordance with the first and the second transmission configuration, a second resource allocation to be used by the UE(s) for transmitting the signals to the communication device,
- generates first control signalling including an indication indicating the first resource allocation, and
- generates second control signalling including an indication indicating the second resource allocation; and
a transmitter which, in operation, transmits to the communication device:
- the first control signalling, and
- the second control signalling to be relayed by the communication device to the UE(s).

12. A method for a communication device, the method including the steps of:
determining, based on whether a transmission of control signalling overlaps, in time, with a relaying transmission of signals:
- a transmission configuration for the transmission of the control signalling, and/or
- a transmission configuration for the relaying of the signals;
transmitting or receiving the control signalling; and
performing the relaying transmission of the signals.

13. A method for a scheduling device, the method including the steps of:
determining a first transmission configuration to be used by a communication device for transmitting or receiving a transmission of control signalling if said transmission overlaps, in time, with a relaying transmission of the communication device, the relaying transmission relaying signals from one or more than one user equipment, UE, to the scheduling device;
determining a second transmission configuration to be used by the communication device for the transmission of the control signalling if said transmission does not overlap, in time, with the relaying transmission;
determining, in accordance with the first and the second transmission configuration, a first resource allocation to be used by the communication device for the transmission of the control signalling;
determining, in accordance with the first and the second transmission configuration, a second resource allocation to be used by the UE(s) for transmitting the signals to the communication device;
generating first control signalling including an indication indicating the first resource allocation;
generating second control signalling including an indication indicating the second resource allocation;
transmitting, to the communication device, the first control signalling; and
transmitting to the communication device, the second control signalling to be relayed by the communication device to the UE(s).

14. An integrated circuit, which, in operation, controls a process of a communication device, the process including the steps of:
determining, based on whether a transmission of control signalling overlaps, in time, with relaying of signals:
- a transmission configuration for the transmission of the control signalling, and/or
- a transmission configuration for the relaying of the signals;
transmitting or receiving the control signalling; and
performing the relaying transmission of the signals.

15. An integrated circuit, which, in operation, controls a process of a scheduling device, the process including the steps of:
determining a first transmission configuration to be used by a communication device for transmitting or receiving a transmission of control signalling if said transmission overlaps, in time, with a relaying transmission of the communication device, the relaying transmission relaying signals from one or more than one user equipment, UE, to the scheduling device;
determining a second transmission configuration to be used by the communication device for the transmission of the control signalling if said transmission does not overlap, in time, with the relaying transmission;
determining, in accordance with the first and the second transmission configuration, a first resource allocation to be used by the communication device for the transmission of the control signalling;
determining, in accordance with the first and the second transmission configuration, a second resource allocation to be used by the UE(s) for transmitting the signals to the communication device;
generating first control signalling including an indication indicating the first resource allocation;
generating second control signalling including an indication indicating the second resource allocation;
transmitting, to the communication device, the first control signalling; and
transmitting to the communication device, the second control signalling to be relayed by the communication device to the UE(s).
